# EUROPEAN PATENT APPLICATION

(11) **EP 4 787 316 A1**
(43) Date of publication of application: **05.08.2026**
(21) Application number: 24870462.9
(22) Date of filing: 12.09.2024
(51) Int. Cl.: G06T 11/00

(54) **METHOD, APPARATUS AND DEVICE FOR GENERATING ARTISTIC CODE IMAGE, AND MEDIUM**

(30) Priority: 27.09.2023 CN 202311270655
(71) Applicant: Alipay (Hangzhou) Digital Service Technology Co., Ltd., Hangzhou, Zhejiang 310000 (CN)
(72) Inventor: CAI, Hongxia, Hangzhou, Zhejiang 310063 (CN); LI, Lei, Hangzhou, Zhejiang 310063 (CN); JIN, Huajing, Hangzhou, Zhejiang 310063 (CN)
(74) Representative: Winter, Brandl - Partnerschaft mbB
(86) International application number: PCT/CN2024/118531
(87) International publication number: WO 2025/066918

(57) **Abstract**

Embodiments of this specification disclose an artistic code image generation method, apparatus, and device, and a medium. The solution may include: obtaining a code image generation request generated based on a trigger operation of a user; generating initial two-dimensional code image data based on the code image generation request; obtaining feature information corresponding to a promotion object; and using a generative artificial intelligence algorithm to process the initial two-dimensional code image data based on the feature information, to obtain an artistic code image.

## Description

This application claims priority to Chinese Patent Application No. 202311270655.6, filed with the China National Intellectual Property Administration on September 27, 2023 and entitled "ARTISTIC CODE IMAGE GENERATION METHOD, APPARATUS, AND DEVICE, AND MEDIUM", which is incorporated herein by reference in its entirety.

### TECHNICAL FIELD

This application relates to the field of computer data processing technologies, and in particular, to an artistic code image generation method, apparatus, and device, and a medium.

### BACKGROUND

With the development of science and technology, daily life is becoming increasingly intelligent. Whether for traveling, event attending, visiting, or the like, a corresponding two-dimensional code may be generated as a credential. By scanning the code, a user can access a venue, take transportation, or the like. Conventional two-dimensional codes are generally formed by a plurality of irregularly arranged squares in black and white, resulting in poor aesthetics. In addition, the two-dimensional code usually carries functional information corresponding to the two-dimensional code, for example, a transportation function or a payment function. The carried information lacks variety.

Therefore, how to enable a two-dimensional code to carry more information and improve user experience is an urgent technical problem to be resolved.

### SUMMARY

Embodiments of this specification provide an artistic code image generation method, apparatus, and device, and a medium, to resolve a problem that information carried in conventional two-dimensional codes lacks variety.

To resolve the foregoing technical problem, embodiments of this specification are implemented as follows:
An embodiment of this specification provides an artistic code image generation method. The method includes:
obtaining a code image generation request generated based on a trigger operation of a user;
generating initial two-dimensional code image data based on the code image generation request;
obtaining feature information corresponding to a promotion object; and
using a generative artificial intelligence algorithm to process the initial two-dimensional code image data based on the feature information, to obtain an artistic code image.

An embodiment of this specification provides an artistic code image generation apparatus. The apparatus includes:
a request obtaining module, configured to obtain a code image generation request generated based on a trigger operation of a user;
a code data generating module, configured to generate initial two-dimensional code image data based on the code image generation request;
a feature obtaining module, configured to obtain feature information corresponding to a promotion object; and
an image processing module, configured to use a generative artificial intelligence algorithm to process the initial two-dimensional code image data based on the feature information, to obtain an artistic code image.

An embodiment of this specification provides an artistic code image generation device. The device includes:
at least one processor; and
a memory communicatively connected to the at least one processor, where
the memory stores instructions executable by the at least one processor, and the instructions are executed by the at least one processor, to cause the at least one processor to:
   obtain a code image generation request generated based on a trigger operation of a user;
   generate initial two-dimensional code image data based on the code image generation request;
   obtain feature information corresponding to a promotion object; and
   use a generative artificial intelligence algorithm to process the initial two-dimensional code image data based on the feature information, to obtain an artistic code image.

An embodiment of this specification provides a computer-readable medium, having computer-readable instructions stored thereon. The computer-readable instructions are executable by a processor to implement an artistic code image generation method.

An embodiment of this specification implements the following beneficial effects: Initial two-dimensional code image data is generated based on an obtained code image generation request that is generated based on a trigger operation of a user, and a generative artificial intelligence algorithm is used to process the initial two-dimensional code image data based on obtained feature information corresponding to a promotion object, to enable a generated artistic code image to carry information about the promotion object, so that a user can learn some information related to the promotion object when using or viewing a two-dimensional code. Even if the user does not open a specific application to read information, the user can learn promotion information when using the two-dimensional code. In this way, information carried in the two-dimensional code image is diversified, and user experience is improved.

### BRIEF DESCRIPTION OF THE DRAWINGS

To describe the technical solutions in embodiments of this specification or the conventional technology more clearly, the following briefly describes the accompanying drawings for describing embodiments or the conventional technology. It is clear that the accompanying drawings in the following descriptions show only some embodiments in this application, and a person of ordinary skill in the art may still derive other drawings from these accompanying drawings without creative efforts.
FIG. 1 is a diagram of an application scenario of an artistic code image generation method according to an embodiment of this specification;
FIG. 2 is a schematic flowchart of an artistic code image generation method according to an embodiment of this specification;
FIG. 3 is a swim lane diagram of an artistic code image generation method according to an embodiment of this specification;
FIG. 4 is a diagram of a structure of an artistic code image generation apparatus corresponding to FIG. 2 according to an embodiment of this specification; and
FIG. 5 is a diagram of a structure of an artistic code image generation device corresponding to FIG. 2 according to an embodiment of this specification.

### DETAILED DESCRIPTION

To make objectives, technical solutions, and advantages of one or more embodiments of this specification clearer, the following clearly and completely describes the technical solutions in one or more embodiments of this specification with reference to specific embodiments of this specification and corresponding accompanying drawings. It is clear that the described embodiments are merely some embodiments rather than all embodiments of this specification. All other embodiments obtained by a person of ordinary skill in the art based on embodiments of this specification without creative efforts shall fall within the protection scope of one or more embodiments of this specification.

The following describes the technical solutions provided in embodiments of this specification in detail with reference to the accompanying drawings.

In a conventional technology, two-dimensional codes generated for accessing some venues, traveling, representing a name card of a user, and the like are mostly codes in black and white. To achieve aesthetics, currently, there are also some artistic two-dimensional code generation methods, in which a user usually needs to manually select an artistic image or fill in image descriptions, and then an artistic two-dimensional code is generated based on the image selected by the user or description information. This method requires the user to configure a lot of settings, place a high requirement on the user, and cannot help the user to learn promotion information such as sport competition events and trending topics while displaying the two-dimensional code.

To resolve the disadvantages in the conventional technology, the following embodiments are provided in this solution.

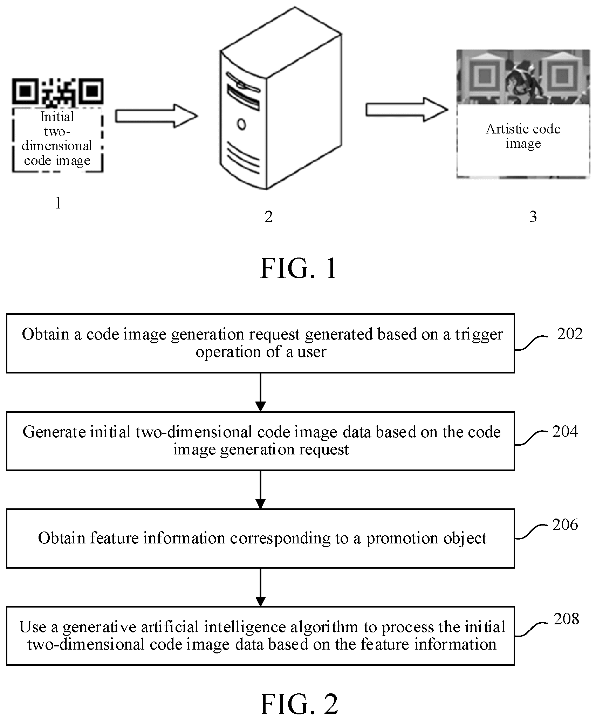

FIG. 1 is a diagram of an application scenario of an artistic code image generation method according to an embodiment of this specification.

As shown in FIG. 1, the solution may mainly include: initial two-dimensional code image data 1, a server 2, and an artistic code image 3. The initial two-dimensional code image data 1 may be a two-dimensional code image generated according to a preset encoding rule, and may carry a data sequence for implementing a specific function, so that a corresponding function is implemented and a corresponding service is handled by scanning the initial two-dimensional code image, for example, a payment function, a collection function, a travel function, or a ticket function. After receiving the initial two-dimensional code image data 1, the server 2 may process the initial two-dimensional code image based on feature information of a promotion object, to obtain the artistic code image 3 that carries a feature of the promotion object, so that a user can learn some information about the promotion object while using or viewing the two-dimensional code, thereby improving user experience.

In the following, an artistic code image generation method according to an embodiment of this specification is described in detail with reference to the accompanying drawings.

FIG. 2 is a schematic flowchart of an artistic code image generation method according to an embodiment of this specification. From a programmatic perspective, a procedure may be performed by a program or an application client deployed on an application server.

As shown in FIG. 2, the procedure may include the following steps.

Step 202: Obtain a code image generation request generated based on a trigger operation of a user.

In this embodiment of this specification, the trigger operation may include at least one of the following trigger operations: tapping/clicking an icon that implements a corresponding function, tapping/clicking or shaking to open an H5 page that implements a corresponding function, using a voice to activate a two-dimensional code that implements a corresponding function, using a special gesture to activate a two-dimensional code that implements a corresponding function, and the like. The code image generation request is used to request the server to generate an artistic code image.

Step 204: Generate initial two-dimensional code image data based on the code image generation request.

In this embodiment of this specification, the initial two-dimensional code image data may be a data sequence for generating an initial two-dimensional code image, the initial two-dimensional code image, description information of the initial two-dimensional code image, a function corresponding to the initial two-dimensional code image, a link character string carried in the initial two-dimensional code image, or the like. The code image generation request may carry at least one of a user identifier, location information authorized by the user, a page identifier, and related information of the initial two-dimensional code image.

During actual application, an initial two-dimensional code image corresponding to the initial two-dimensional code image data may be generated according to a preset encoding rule, for example, a commonly used QR encoding rule or an applet code encoding rule. The initial two-dimensional code image may be a static two-dimensional code image or a dynamic two-dimensional code image. To ensure security, a generated two-dimensional code image may be a two-dimensional code that is generated based on an operation of a user and remains valid within a preset time period, for example, within two minutes or five minutes. The initial two-dimensional code image may be used in scenarios such as trading, accessing a specific venue, and watching a large-scale event.

Step 206: Obtain feature information corresponding to the promotion object.

In this embodiment of this specification, the promotion object may be information related to a specific event, and the event may be an upcoming event, an ongoing event, or a past event, for example, a sports event that is being held in city H, or a vocal concert to be held in city I. The promotion object may be an event, for example, the sports event or the vocal concert. The promotion object may be public welfare information or commercial information. For example, the promotion object may be safety-related prompt information intended to raise public safety awareness, such as a promotional poster. The promotion object is not specifically limited herein.

The feature information may be information capable of representing the promotion object, and may be an image, for example, an image related to a sports event or an image related to a specific sport game; or may be descriptive information about a feature of the promotion object, for example, descriptions of participants in a specific event, an event location, event time, and event activities; or may be a style model that can be used in combination with an image generation model to enable the image generation model to generate an image including information about the promotion object, where the style model may be understood as a parameter control model, for example, a lora model. It may be understood that a data format of the feature information may be a data format that can be recognized and processed by the image generation model. If the data format of the feature information does not conform to a preset input format of the model, the data format of the feature model may be converted, so that the feature information can be processed by the model.

Step 208: Use a generative artificial intelligence algorithm to process the initial two-dimensional code image data based on the feature information, to obtain an artistic code image.

The generative artificial intelligence algorithm, artificial intelligence generated content (AIGC), also referred to as generative AI, is used to generate content by using artificial intelligence, and may generate content of a same or different type based on input data. In this embodiment of this specification, artistic processing may be performed on the feature information and the initial two-dimensional code image by using AIGC (AI generated content), to enable the feature information to be displayed in the two-dimensional code image. The artistic code image may have a function of a conventional two-dimensional code image, and may also carry some promotion information, so that when a user obtains the two-dimensional code image, the user can learn some promotion information.

In this embodiment of this specification, the artistic code image includes an image feature representing a to-be-promoted object. During actual application, a correspondence each promotion object and feature information of the promotion object may be established, and the feature information corresponding to the promotion object may be determined, based on the correspondence, and then be fused with the initial two-dimensional code image data, to obtain an artistic code image that can reflect the feature of the promotion object. The artistic code image can implement a corresponding function, and can present some information about the promotion object. When the user views or uses a two-dimensional code, some other information is presented for the user. In this way, information carried in the two-dimensional code is more diversified, and user experience is also improved.

It should be understood that a sequence of some steps in the method according to one or more embodiments of this specification may be adjusted as needed, or some steps may be omitted or deleted.

According to the method in FIG. 2, the initial two-dimensional code image data is generated based on the obtained code image generation request that is generated based on the trigger operation of the user, and the generative artificial intelligence algorithm is used to process the initial two-dimensional code image data based on the obtained feature information corresponding to the promotion object, to enable the generated artistic code image to carry the information about the promotion object, so that the user can learn some information related to the promotion object when using or viewing a two-dimensional code. Even if the user does not open a specific application to read information, the user can learn promotion information when using the two-dimensional code. In this way, information carried in the two-dimensional code image is diversified, and user experience is improved.

Based on the method in FIG. 2, an embodiment of this specification further provides some specific implementations of the method, which are described below.

In this embodiment of this specification, the feature information may be an image about the promotion object, and the artistic code image may be obtained through image fusion. Optionally, the feature information may include an image related to the promotion object.

The using a generative artificial intelligence algorithm to process the initial two-dimensional code image data based on the feature information, to obtain an artistic code image may specifically include:
using the generative artificial intelligence algorithm to perform style transfer on the initial two-dimensional code image data based on the image related to the promotion object, to obtain the artistic code image.

In this embodiment of this specification, the image related to the promotion object may include an image of a news page of the promotion object, an iconic image of the promotion object, an image of a venue of the promotion object, an image of a key figure of the promotion object, a promotional image of the promotion object, an image of partial content of the promotion object, or the like. Style transfer may be performed by using a style transfer model, an image fusion model, or the like, to perform artistic processing on the initial two-dimensional code image data based on the image related to the promotion object, so as to obtain the artistic code image that includes a feature in the image and that is used to implement a specific function. For example, the promotion object is a specific currently popular video series. A promotional image of the series, a scene from the series, a screenshot of comments, or the like may be used as an image corresponding to a feature of the series. One of the images may be selected to be used to process an initial two-dimensional code image by using the image processing model, to obtain an artistic code image about the feature of the series, so that when a user views or uses a two-dimensional code, the user can learn some corresponding information about the series. It may be understood that the images or features employed in embodiments of this specification are all used with authorization or permission.

During processing of the image and the initial two-dimensional code image data, the artistic code image may be obtained by fusing the image and a two-dimensional code image corresponding to the initial two-dimensional code image data. Specifically, in a fusion process, the image and the initial two-dimensional code image may be adjusted to a same size, an image area in the image corresponding to a filled area in the initial two-dimensional code image is determined based on the filled area in the initial two-dimensional code image, and the image area is processed. A data sequence obtained through processing is filled into the corresponding filled area in the initial two-dimensional code image. After filling, style transfer may be further performed, based on a remaining image area in the image by using the style transfer model, on another area other than the filled area in the filled two-dimensional code image, to obtain the artistic code image, so that the artistic code image can reflect the feature of the promotion object without compromising functionality. Alternatively, image fusion may be performed by using some other existing known fusion methods. This is not specifically limited herein.

During actual application, some low-rank adaptation models may be used to control parameters of the image fusion model, to improve image generation efficiency. Optionally, in this embodiment of this specification, the feature information includes a style model corresponding to the promotion object. The style model may include a style model obtained by training a preset style model by using an image related to the promotion object.

The using a generative artificial intelligence algorithm to process the initial two-dimensional code image data based on the feature information, to obtain an artistic code image may specifically include:
controlling a parameter of a diffusion model by using the style model corresponding to the promotion object, and processing the initial two-dimensional code image data, to obtain the artistic code image, where the diffusion model is a model having an image generation function.

In this embodiment of this specification, different promotion objects may correspond to different style models. The style model may include a trained model that can represent a style feature of the promotion object, for example, a lora model. The lora model is a low-rank adapter. A parameter in the AIGC algorithm may be controlled by using the style model, and style transfer is performed on the initial two-dimensional code image, to obtain the artistic code image having the feature of the promotion object. It may be understood that the lora model is used as a plug-in of a stable diffusion (SD) model, and a trained lora model may be used to control a parameter in the SD model, so that style transfer can be performed on the initial two-dimensional code image based on the feature of the promotion object represented by the lora model. Alternatively, one style model may correspond to one type of promotion object. For example, a style model 1 may correspond to a TV series promotion object, a style model 2 may correspond to a sports promotion object, and a style model 3 may correspond to a tourist attraction promotion object.

In this embodiment of this specification, style models corresponding to promotion objects may be further pre-trained for different promotion objects, so that after a request of a user for displaying a code image is obtained, a quick response may be provided by invoking a style model obtained through pre-training, to provide the user with the code image reflecting a feature of the promotion object. Optionally, the method in this embodiment of this specification may further include:
for a plurality of promotion objects, obtaining an image related to each promotion object;
for any promotion object in the plurality of promotion objects, training the preset style model by using the image related to the any promotion object, to obtain a style model corresponding to the any promotion object; and
establishing first correspondences between the plurality of promotion objects and corresponding style models; and
the obtaining feature information corresponding to a promotion object may specifically include:
   determining a style model corresponding to the promotion object based on the first correspondences.

The preset model may be a model that can represent a style feature, for example, a lora model. In this embodiment of this specification, during training of the preset style model, the preset style model may be trained based on a type of the promotion object, to obtain a style model corresponding to each type of promotion object, and the first correspondence is established. Alternatively, the preset style model may be trained based on a specific promotion object, to obtain a style model corresponding to each specific promotion object, and the first correspondence is established. For example, the preset style model may be trained based on a sports event 1, to obtain a style model A, and a correspondence between the sports event 1 and the model A is established; or the preset style model may be trained based on a tourist attraction 2, to obtain a style model B, and a correspondence between the tourist attraction 2 and the model B is established.

During actual application, a correspondence between an image or description information of a feature of a promotion object and the promotion object may also be established.

During actual application, to enable promotion information to better satisfy a user requirement, and to provide meaningful information for a user, a promotion period of a promotion object may be set, and a code image including a feature of the promotion object may be generated for the user within the period. Optionally, the method in this embodiment of this specification may further include:
obtaining promotion periods corresponding to a plurality of promotion objects;
determining request time corresponding to the code image generation request;
determining, based on the request time and the promotion periods, a target promotion period covering the request time; and
using a promotion object corresponding to the target promotion period as a target promotion object; and
the obtaining feature information corresponding to a promotion object may specifically include:
   obtaining feature information corresponding to the target promotion object.

In this embodiment of this specification, the promotion period may represent a time period from promotion start time to promotion end time. Promotion time may be determined based on event time of a promotion object, and may be a period of time before or after an event, for example, one month before the event or one week after the event. Different promotion periods may be set for different promotion objects. This is not specifically limited herein. For example, for a specific competition event, one month before the competition and/or one week after the competition may be used as a promotion period, to allow a user to purchase a ticket and learn about honors of teams participating in the competition.

In this embodiment of this specification, the request time may be time at which a server obtains a code image generation request, or may be time at which a terminal sends a code image generation request. The target promotion period may be determined by comparing the request time with the promotion period to determine whether the request time is within a time period from the promotion start time to the promotion end time. If the request time is within the time period from the promotion start time to the promotion end time, the promotion period may be used as the target promotion period.

In this embodiment of this specification, if there are a plurality of target promotion objects, one target promotion object may be randomly selected, or may be selected according to a preset rule. The preset rule may be determined based on factors such as a user preference, a quantity of previous promotions, and a weight of a promotion object. The weight of the promotion object may be set based on an impact level of the promotion object. The impact level may be determined based on an impact scope of an event. An event with a high impact level may have a large impact scope, and an event with a low impact level may have a small impact scope. For example, for existing promotion objects, which are an international sports event and a provincial or municipal youth football cup, a weight value of the international sports event may be set to be greater than a weight value of the provincial or municipal youth football cup. Alternatively, default weights may be set for all promotion objects, and the weights are adjusted based on a quantity of subsequent promotions. For example, it is assumed that the promotion object is a tourist attraction. When tourist attractions are selected for the first time, weight values of the promotional tourist attractions may be set to a same value. Afterwards, a weight of a tourist attraction for which an artistic code image has been generated may be reduced, to prevent repeatedly using the tourist attraction to generate artistic code images, which causes aesthetic fatigue to a user or limits the variety of information learned by the user, and may affect user experience. Based on the foregoing example, for a case in which an artistic code of the promotion object is selected based on user preferences, for example, if a user likes a specific sport, information related to the sport may be used as a promotion object, corresponding feature information is obtained, and a corresponding artistic code image is generated and presented to the user.

In an implementation, optionally, the method in this embodiment of this specification may further include:
obtaining event time of the target promotion object; and
determining whether the request time falls within the event time; and
the obtaining feature information corresponding to a promotion object specifically includes:
   if the request time falls within the event time, obtaining the feature information corresponding to the target promotion object.

The event time may be understood as a time period within which a specific event is to be held. To enable users to learn about some events that are currently ongoing, an ongoing event may be used as a promotion object in this embodiment of this specification.

During actual application, the promotion period may include the time period represented by the event time, or may not include the time period represented by the event time. In this embodiment of this specification, if the request time is not within the event time, determining may be performed by using the promotion period as a determining condition; or if the promotion period does not include the time period represented by the event time, and the request time is not within the event time, feature information corresponding to the promotion object may not be obtained. For an ongoing promotion object, alternatively, an event time period or a broadcast time period for the promotion object may be used as a promotion period. For example, if a competition time period for a sport event is 8:00 to 18:00 every day from May 10 to July 1 this year, a corresponding promotion period may be set as 8:00 to 18:00 every day from May 10 to July 1 this year. In this way, in other time periods, artistic code images can be used to carry other promotion objects, so that the user can learn more information, and diversified information can be presented.

In an implementation, based on location information of the user, an event in an area in which the user is located may be regarded as a promotion object. Optionally, the method in this embodiment of this specification may further include:
obtaining location information of the user; and
determining, based on the location information, a promotion object in a geographical area in which the location information is located; and
the obtaining feature information corresponding to a promotion object may specifically include:
   obtaining feature information corresponding to the promotion object in the geographical area in which the location information is located.

In this embodiment of this specification, the location information is location information authorized by the user. A geographical area in which each promotion object is located may be determined based on a location of an event venue or the like of each promotion object, and a second correspondence between feature information of promotion objects in each geographical area and the geographical area may be established, so that a two-dimensional code image for a user in the geographical area can be processed based on the feature information in the second correspondence, so as to enable the user to learn more information about the area in which the user is located. This can better meet user requirements and enhance a sense of belonging of the user. For example, the user is in an area A, and promotion objects in the area A include a basketball game, a dialog performance, and the like. One of the promotion objects may be selected as a target promotion object according to a preset rule, and feature information of the target promotion object is obtained, but feature information of a concert in an area B is not obtained.

In an implementation, alternatively, the two-dimensional code image may be generated based on style information of the geographical area. Optionally, the method in this embodiment of this specification may further include:
obtaining area feature information of the geographical area, where the area feature information is style information related to a feature of the geographical area; and
the using a generative artificial intelligence algorithm to process the initial two-dimensional code image data based on the feature information, to obtain an artistic code image may specifically include:
   using the generative artificial intelligence algorithm to process the initial two-dimensional code image data based on the feature information and the area feature information, to obtain the artistic code image.

In this embodiment of this specification, the style information may represent a unique characteristic or a feature of an area in aspects such as architecture, culture, natural scenery, technology, and hosted events. The initial two-dimensional code image data may be processed in combination with the style information corresponding to the geographical area and the feature information of the promotion object. For example, the user is in an area C, a style of the area C is a style of a Jiangnan water town, and the promotion object is a sports event. An artistic code image that includes a sport game or a sports event identifier and that is in the style of a Jiangnan water town may be generated. Different areas may share a same style. An area style may include ancient pavilion, classical garden, Jiangnan water town, artistic style, technological style, modern style, and the like.

During actual application, feature information of a promotion object and feature information of an area may be input into a generative artificial intelligence algorithm, to obtain a processed image. The input feature information may be textual description information, for example, text descriptions such as volleyball, sports event, Jiangnan, and water town; or may be an image of a promotion object, an image representing a feature of an area, or the like; or may be a style model obtained through training based on an image related to the promotion object, a style model obtained through training based on a feature image of a geographical area, or the like. A specific form of the feature information is not specifically limited herein, provided that the feature information can meet actual requirements.

During actual application, the promotion objects may be various promotion objects that need to be promoted, which may be of a cultural type or of a safety alert type, or may be about some events or about some hot news, or the like. Optionally, in this embodiment of this specification, the promotion object may include at least one of a large-scale event, an IP character, and a news event.

In this embodiment of this specification, the large-scale event may be an event in which a quantity of participants is greater than a preset quantity. The IP character may represent a figure from intellectual properties, for example, literature, films and television shows, animation, or games; or may represent a figure designed by a company based on a philosophy, a brand style, or the like of the company. The news event may be an event that occurred within a preset time period, or news information of an event with high traffic or public attention within a preset time period. Specifically, the news event may include participants or objects involved in the news, an image captured at the time of occurrence, text of news reports, or the like. The promotion object may further include a tourist attraction, a city landmark, and the like. The promotion object may be set based on an actual requirement. This is not specifically limited herein.

During actual application, to provide the user with information in which the user may be interested, and improve user experience, in an implementation, the promotion object may be determined based on a ticket, for example, a ticket purchased by the user. Optionally, the method in this embodiment of this specification may further include:
obtaining ticket information of a viewing ticket purchased by the user; and
the obtaining feature information corresponding to a promotion object may specifically include:
   obtaining feature information related to a viewed object corresponding to the ticket information.

During actual application, the obtained ticket information may be obtained by the server after authorization by the user. The ticket information may include information such as a validity period of the ticket, a venue where the ticket is used, and an event name corresponding to the ticket. The viewed object corresponding to the ticket information may include a competition event, for example, a game competition, a sport competition, or a calligraphy competition. The corresponding feature information may include at least one of feature information related to a competition event, such as feature information representing the competition event, feature information representing a competition game in the competition event, feature information representing a competition result of the competition event, and feature information representing a game result of the competition game in the competition event. For example, in a sports event, a ticket is used for accessing an event venue of the sports event and watching the sports event. The feature information related to the viewed object may be information related to a competition game, a competition result, medal counts and rankings, and the like in the sports event. If one ticket can be used to watch a plurality of competition games, a feature of a promotion object carried in a two-dimensional code of the ticket may be updated according to the timing of each game. For example, if timing for a badminton competition is from 8:00 to 11:00, the promotion object of the ticket within the time period may be updated to feature information related to the badminton competition game, and if timing for a swimming competition is from 14:00 to 18:00, the promotion object of the ticket within this time period may be updated to feature information related to the swimming competition game. It may be understood as that during a time period in which a game is ongoing, a corresponding artistic code image is generated based on feature information of the game.

In an implementation, optionally, in this embodiment of this specification, the viewing ticket may include at least one of a ticket of a sport competition event, a theater ticket, a movie ticket, a concert ticket, a tourist attraction ticket, or an amusement park ticket.

In this embodiment of this specification, the sport competition event may include various competition events such as an esports competition, a ball competition, and an athletics competition. The theater ticket may include a ticket used for watching a theatrical performance, such as a stage play, an opera, a drama, or a Peking opera. The concert ticket may include a ticket for a vocal concert, a musical performance, a music competition, or the like. The tourist attraction ticket may be a ticket used for visiting places such as a museum, an ancient building, or a scenic spot. A ticket, for example, an audience ticket for attending a live program or show, may be further included. During actual application, if request time does not correspond to any promotion object, a user terminal may directly display an initial two-dimensional code image, or may determine a promotion object randomly or based on event popularity, user preferences, or the like.

In an implementation, optionally, in this embodiment of this specification, if the viewing ticket is a ticket of a sport competition event, the method may further include:
determining, based on a ticket of a sport competition event purchased by the user, a competition game corresponding to the ticket of the sport competition event; and
the obtaining feature information corresponding to a promotion object may specifically include:
   obtaining feature information corresponding to the competition game.

In this embodiment of this specification, corresponding feature information may be determined based on a game in a competition event corresponding to a ticket. For example, if a user purchases a ticket for watching an opening ceremony of a competition event, feature information corresponding to the opening ceremony of the competition event is obtained to generate an artistic code image for presentation to the user. If another user purchases a ticket for watching a basketball game, feature information corresponding to the basketball game may be obtained to generate artistic code image information for presentation to the user. This can improve user experience, and can also serve as a reminder for the user, to help the user avoid forgetting to use the purchased ticket.

During actual application, the promotion object may alternatively be a promotion object provided by a party requesting promotion. For example, to enhance the promotion of an IP character, the party requesting the promotion may select a promotion scope, or determine a promotion scope based on a quantity of resources provided by the party requesting the promotion. The promotion scope may include promotion time, promotion area, a promotion application type, and the like. During actual application, whether a user is within the promotion scope may be determined based on a location of the user. If the user is within the promotion scope, a code image including a feature of the promotion object may be provided for the user. If the user is not within the promotion scope, a code image including the feature of the promotion object may not be displayed to the user, or a related feature of another promotion object may be selected to generate a code image. For example, cultural information such as books, art, and calligraphy, trending event information, entertainment information, or travel-related information may be used as a promotion object for promotion. The promotion scope may be a geographical scope, a type of application, a type of code for implementing a function, or the like. The promotion scope may be in positive correlation with a quantity of resources provided by the party requesting the promotion.

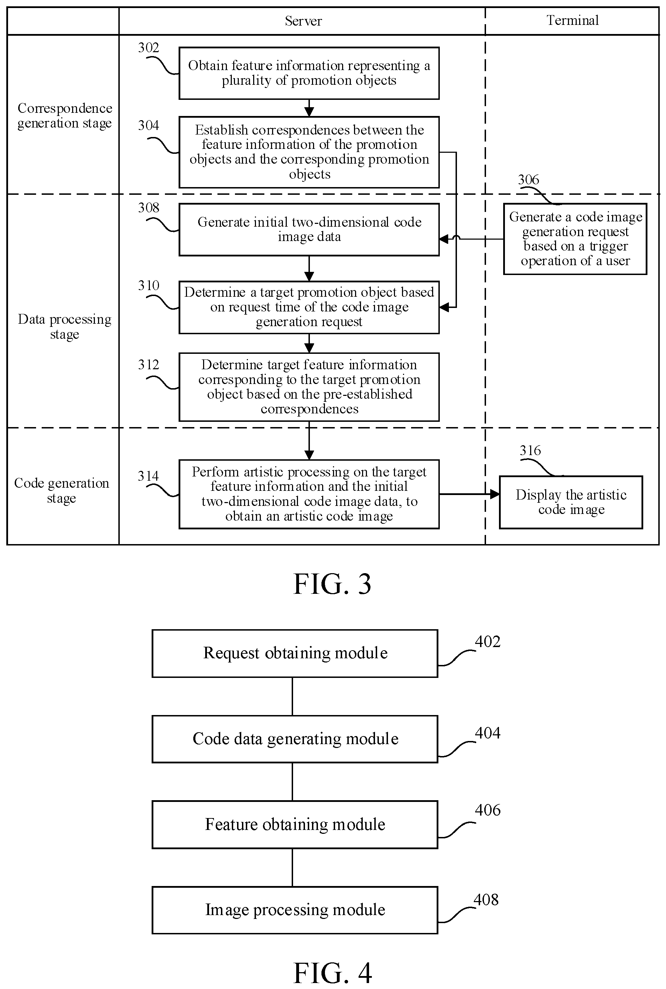

To describe the artistic code image generation method provided in embodiments of this specification more clearly, FIG. 3 is a swim lane diagram of an artistic code image generation method according to an embodiment of this specification. As shown in FIG. 3, the method may include a correspondence generation stage, a data processing stage, and a code generation stage, and may specifically include:
Step 302: A server obtains feature information representing a plurality of promotion objects.

In this embodiment of this specification, the feature information may include an image representing a feature of the promotion object, feature description information, or a trained style model, for example, a lora model. The image representing the feature of the promotion object may be an image related to a factor, for example, a participant or an event nature of the promotion object. The feature description information may be information used for describing features in a feature image, for example, a name, an attribute, and a style of the promotion object. The trained style model may be obtained by training a preset style model based on a feature image corresponding to the promotion object.

Step 304: The server establishes a correspondence between the feature information of each promotion object and a corresponding promotion object.

In this embodiment of this specification, the feature information is an image or feature description information including a feature of the promotion object, and a correspondence between the image or the feature description information and the promotion object may be established. If the feature information is a trained style model, a correspondence between the trained style model and the promotion object may be established.

Step 306: A terminal generates a code image generation request based on a trigger operation of a user.

In this embodiment of this specification, the trigger operation of the user may be an operation, for example, tapping/clicking or shaking a terminal. The code image generation request may include related information of a trigger page, so that the server can generate a code image corresponding to the page. For example, when a "transport code" control is tapped/clicked, a request for requesting to generate a transport code may be sent. The request may include account-related information of a user and an identifier indicating a transport function, so that the server can generate the transport code requested by the user.

Step 308: The server generates initial two-dimensional code image data based on the code image generation request.

In this embodiment of this specification, the initial two-dimensional code image data may be a two-dimensional code image, or may be information related to the two-dimensional code image, for example, link information carried in the two-dimensional code image, or a data sequence used for generating the two-dimensional code image.

Step 310: The server determines a target promotion object based on request time of the code image generation request.

In this embodiment of this specification, whether a promotion object is a promotable promotion object may be determined by comparing the promotion period with the request time of the promotion object.

Step 312: The server determines target feature information corresponding to the target promotion object based on the pre-established correspondence.

In this embodiment of this specification, the target feature information may be obtained based on corresponding feature information of the promotion object in the correspondence, and may be an image, feature description information, or a trained style model.

Step 314: The server performs artistic processing on the target feature information and the initial two-dimensional code image data by using an AIGC algorithm, to obtain an artistic code image.

In this embodiment of this specification, the server may perform artistic processing on the target feature information and the initial two-dimensional code image data by using the AIGC algorithm. This may be understood as integrating the target feature information into the initial two-dimensional code image data, so that a function of a two-dimensional code image is reserved while embedding a feature of a target promotion object, so as to present diversified information to a user and provide good use experience for the user.

Step 316: The terminal presents the artistic code image to the user.

In this embodiment of this specification, the artistic code image may be a plurality of artistic code images generated based on a plurality of pieces of different feature information of a same promotion object. Alternatively, a plurality of artistic code images may be generated for same feature information, and an artistic code image that is more suitable is selected for presentation.

A plurality of two-dimensional code images of different versions may be separately fused with the same feature information, to generate a plurality of artistic code images, and then each artistic code image may be scored according to a preset scoring rule, and an artistic code image having a highest score is sent to the terminal. The preset scoring rule may include: comparing a feature in an artistic code image with a feature included in feature information, determining a quantity or proportion of features that is in each artistic code image and that is consistent with the features included in the feature information, and presenting an artistic code image with the largest quantity or proportion of consistent features. The preset scoring rule may further include a trained scoring model. Code images may be alternatively evaluated based on factors such as proportions of abnormal data in artistic code images, to determine recognition rates of the code images, and a code image with a recognition rate greater than a preset threshold is sent to the user, or a code image with a highest recognition rate may be sent to the user. The abnormal data may indicate data that exists in the artistic code image and that is inconsistent with data used when the artistic code image is generated. For example, if data corresponding to a specific code element in the artistic code image is 1, while data corresponding to the code element when the artistic code image is generated is 0, the data may be determined as abnormal data. The initial two-dimensional code images of different versions may include two-dimensional code images generated by using different template versions, different masks, or the like, and may further include two-dimensional code images obtained through operations such as mirroring or rotating performed on the two-dimensional code images.

According to the foregoing method, feature information of a promotion object and initial two-dimensional code image data may be processed, so that an obtained two-dimensional code image may carry a feature of the promotion object, and an original function is retained. In this way, information carried in the two-dimensional code image is more diversified, and a user can learn some other information when viewing or using a two-dimensional code, thereby improving user experience.

Based on the same idea, an embodiment of this specification further provides an apparatus corresponding to the foregoing method. FIG. 4 is a diagram of a structure of an artistic code image generation apparatus corresponding to FIG. 2 according to an embodiment of this specification. As shown in FIG. 4, the apparatus may include:
a request obtaining module 402, configured to obtain a code image generation request generated based on a trigger operation of a user;
a code data generating module 404, configured to generate initial two-dimensional code image data based on the code image generation request;
a feature obtaining module 406, configured to obtain feature information corresponding to a promotion object; and
an image processing module 408, configured to use a generative artificial intelligence algorithm to process the initial two-dimensional code image data based on the feature information, to obtain an artistic code image.

Based on the same concept, an embodiment of this specification further provides a device corresponding to the foregoing method.

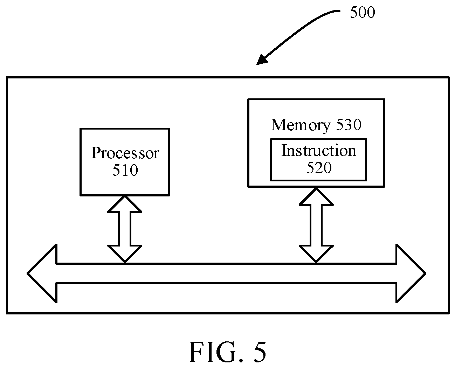

FIG. 5 is a diagram of a structure of an artistic code image generation device corresponding to FIG. 2 according to an embodiment of this specification. As shown in FIG. 5, the device 500 may include:
at least one processor 510; and
a memory 530, communicatively connected to the at least one processor, where
the memory 530 stores instructions 520 executable by the at least one processor 510, and the instructions are executed by the at least one processor 510, to cause the at least one processor 510 to:
   obtain a code image generation request generated based on a trigger operation of a user;
   generate initial two-dimensional code image data based on the code image generation request;
   obtain feature information corresponding to a promotion object; and
   use a generative artificial intelligence algorithm to process the initial two-dimensional code image data based on the feature information, to obtain an artistic code image.

Based on the same concept, an embodiment of this specification further provides a computer-readable medium corresponding to the foregoing method. The computer-readable medium stores computer-readable instructions, and the computer-readable instructions are executable by a processor to implement the foregoing artistic code image generation method.

Embodiments of this specification are all described in a progressive manner, for same or similar parts in the embodiments, refer to these embodiments, and descriptions of each embodiment focus on a difference from other embodiments. Especially, the device in FIG. 5 is basically similar to the method embodiments, and therefore is described briefly; for related parts, reference may be made to partial descriptions in the method embodiments.

In the 1990s, improvements in a technology can be clearly categorized as hardware improvements (for example, improvements to a circuit structure like a diode, a transistor, and a switch) and software improvements (improvements to a method procedure). However, with the technical development, improvements of many method procedures can be considered as direct improvements to hardware circuit structures. Designers almost all program an improved method procedure to a hardware circuit, to obtain a corresponding hardware circuit structure. Therefore, it does not mean that an improvement to a method procedure cannot be implemented by using a hardware entity module. For example, a programmable logic device (PLD) such as Field Programmable Gate Array (FPGA) is a type of integrated circuit whose logic function is determined by a user by programming the device. The designers perform voluntary programming to "integrate" a digital system into a single PLD without a need for a chip manufacturer to design and prepare a dedicated integrated circuit chip. In addition, currently, instead of making an integrated circuit chip manually, the programming is mostly implemented by using "logic compiler" software that is similar to a software compiler configured to write a program. Original code before compiling is also written in a specific programming language, which is referred to as Hardware Description Language (HDL). There are many types of HDLs, for example, Advanced Boolean Expression Language (ABEL), Altera Hardware Description Language (AHDL), Confluence, Cornell University Programming Language (CUPL), HDCal, Java Hardware Description Language (JHDL), Lava, Lola, MyHDL, PALASM, and Ruby Hardware Description Language (RHDL). Currently, Very-High-Speed Integrated Circuit Hardware Description Language (VHDL) and Verilog are most commonly used. A person skilled in the art should also understand that as long as a method procedure is logically programmed and then programmed to an integrated circuit by using the foregoing hardware description languages, a hardware circuit that implements the logical method procedure can be easily obtained.

A controller can be implemented in any suitable manner. For example, the controller may be in a form of, for example, a microprocessor or a processor and a computer-readable medium storing computer-readable program code (for example, software or firmware) executable by the microprocessor or the processor, a logic gate, a switch, an application-specific integrated circuit (ASIC), a programmable logic controller, and an embedded microcontroller. Examples of the controller include, but are not limited to, the following microcontrollers: ARC 625D, Atmel AT91SAM, Microchip PIC18F26K20, and Silicone Labs C8051F320. A memory controller can also be implemented as a part of memory control logic. A person skilled in the art also learns that, in addition to implementing the controller purely through the computer-readable program code, it is also possible to achieve the same function by logically programming the method steps to implement the controller in the form of the logic gate, the switch, the application-specific integrated circuit, the programmable logic controller, the embedded microcontroller, and the like. Therefore, such a controller may be considered as a hardware component, and apparatuses included in the controller for implementing various functions may also be considered as structures inside the hardware component. Alternatively, apparatuses for implementing various functions may be considered as both software modules implementing the method and structures inside the hardware component.

The system, apparatus, module, or unit described in the foregoing embodiments may be specifically implemented by a computer chip or an entity, or implemented by a product having a specific function. A typical implementation device is a computer. Specifically, for example, the computer may be a personal computer, a laptop computer, a cellular phone, a camera phone, a smartphone, a personal digital assistant, a media player, a navigation device, an email device, a game console, a tablet computer, a wearable device, or any combination thereof.

For ease of description, when the apparatus is described, the apparatus is functionally divided into units that are separately described. Certainly, in implementing this application, functions of the units may be implemented in a same piece of or a plurality of pieces of software and/or hardware.

A person skilled in the art should understand that embodiments of the present invention may be provided as a method, a system, or a computer program product. Therefore, the present invention may use a form of hardware-only embodiments, software-only embodiments, or embodiments with a combination of software and hardware. Moreover, the present invention may use a form of a computer program product that is implemented on one or more computer-usable storage media (including but not limited to a disk memory, a compact disc read-only memory (CD-ROM), an optical memory, and the like) that include computer-usable program code.

The present invention is described with reference to the flowcharts and/or block diagrams of the method, the device (system), and the computer program product according to the embodiments of the present invention. It should be understood that computer program instructions may be used for implementing each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that an apparatus configured to implement a specific function in one or more processes in the flowcharts and/or in one or more blocks in the block diagrams is generated by using instructions executed by a computer or the processor of any other programmable data processing device.

These computer program instructions may alternatively be stored in a computer-readable memory that can instruct a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more processes in the flowcharts and/or in one or more blocks in the block diagrams.

In a typical configuration, a computing device includes one or more processors (for example, CPUs), an input/output interface, a network interface, and a memory.

The memory may include a form such as a volatile memory, a random access memory (RAM), and/or a non-volatile memory in a computer-readable medium, for example, a read-only memory (ROM) or a flash RAM. The memory is an example of the computer-readable medium.

The computer-readable medium includes a non-volatile medium and a volatile medium, a removable medium and a non-removable medium, which may implement storage of information by using any method or technology. The information may be a computer-readable instruction, a data structure, a program module, or other data. An example of a storage medium in a computer includes, but is not limited to, a phase-change memory (PRAM), a static random access memory (SRAM), a dynamic random access memory (DRAM), a random access memory (RAM) of another type, a read-only memory (ROM), an electrically erasable programmable read-only memory (EEPROM), a flash memory or another memory technology, a compact disc read-only memory (CD-ROM), a digital versatile disc (DVD) or another optical storage, a magnetic cassette, a magnetic disk storage or another magnetic storage device or any other non-transmission medium, which may be configured to store information accessible by a computing device. According to definitions in this specification, the computer-readable medium does not include transitory computer-readable media (transitory media), for example, a modulated data signal and a modulated carrier.

It should be further noted that the term "include", "comprise", or any variants thereof is intended to cover a non-exclusive inclusion. Therefore, a process, method, article, or device that includes a series of elements includes not only those elements, but also other elements that are not explicitly listed, or includes elements inherent to such a process, method, article, or device. Unless otherwise specified, an element limited by a phrase "including a/an..." does not exclude other same elements existing in the process, the method, the article, or the device that includes the element.

A person skilled in the art should understand that embodiments of this application may be provided as a method, a system, or a computer program product. Therefore, this application may use the form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application can be described in the general context of computer-executable instructions executed by a computer, for example, a program module. Generally, the program module includes a routine, a program, an object, a component, a data structure, and the like that executes a specific task or implements a specific abstract data type. This application can also be practiced in a distributed computing environment in which tasks are performed by remote processing devices that are connected through a communication network. In a distributed computing environment, the program module may be located in both local and remote computer storage media including storage devices.

The foregoing descriptions are merely examples of embodiments of this application, and this is not intended to limit this application. For a person skilled in the art, various modifications and variations may be made to this application. Any modification, equivalent replacement, or improvement made without departing from the spirit and principle of this application shall fall within the scope of the claims of this application.

## Claims

1. An artistic code image generation method, comprising:
obtaining a code image generation request generated based on a trigger operation of a user;
generating initial two-dimensional code image data based on the code image generation request;
obtaining feature information corresponding to a promotion object; and
using a generative artificial intelligence algorithm to process the initial two-dimensional code image data based on the feature information, to obtain an artistic code image.

2. The method according to claim 1, wherein the feature information comprises an image related to the promotion object; and
the using a generative artificial intelligence algorithm to process the initial two-dimensional code image data based on the feature information, to obtain an artistic code image specifically comprises:
using the generative artificial intelligence algorithm to perform style transfer on the initial two-dimensional code image data based on the image related to the promotion object, to obtain the artistic code image.

3. The method according to claim 1, wherein the feature information comprises a style model corresponding to the promotion object; the style model comprises a style model obtained by training a preset style model by using an image related to the promotion object; and
the using a generative artificial intelligence algorithm to process the initial two-dimensional code image data based on the feature information, to obtain an artistic code image specifically comprises:
controlling a parameter of a diffusion model by using the style model corresponding to the promotion object, and processing the initial two-dimensional code image data, to obtain the artistic code image, wherein the diffusion model is a model having an image generation function.

4. The method according to claim 3, wherein the method further comprises:
for a plurality of promotion objects, obtaining an image related to each promotion object;
for any promotion object in the plurality of promotion objects, training the preset style model by using the image related to the any promotion object, to obtain a style model corresponding to the any promotion object; and
establishing first correspondences between the plurality of promotion objects and corresponding style models; and
the obtaining feature information corresponding to a promotion object specifically comprises:
determining a style model corresponding to the promotion object based on the first correspondences.

5. The method according to claim 1, wherein the method further comprises:
obtaining promotion periods corresponding to a plurality of promotion objects;
determining request time corresponding to the code image generation request;
determining, based on the request time and the promotion periods, a target promotion period covering the request time; and
using a promotion object corresponding to the target promotion period as a target promotion object; and
the obtaining feature information corresponding to a promotion object specifically comprises:
obtaining feature information corresponding to the target promotion object.

6. The method according to claim 5, wherein the method further comprises:
obtaining event time of the target promotion object; and
determining whether the request time falls within the event time; and
the obtaining feature information corresponding to a promotion object specifically comprises:
if the request time falls within the event time, obtaining the feature information corresponding to the target promotion object.

7. The method according to claim 1, wherein the method further comprises:
obtaining location information of the user; and
determining, based on the location information, a promotion object in a geographical area in which the location information is located; and
the obtaining feature information corresponding to a promotion object specifically comprises:
obtaining feature information corresponding to the promotion object in the geographical area in which the location information is located.

8. The method according to claim 7, wherein the method further comprises:
obtaining area feature information of the geographical area, wherein the area feature information is style information related to a feature of the geographical area; and
the using a generative artificial intelligence algorithm to process the initial two-dimensional code image data based on the feature information, to obtain an artistic code image specifically comprises:
using the generative artificial intelligence algorithm to process the initial two-dimensional code image data based on the feature information and the area feature information, to obtain the artistic code image.

9. The method according to any one of claims 1 to 8, wherein the promotion object comprises at least one of a large-scale event, an IP character, and a news event.

10. The method according to claim 1, wherein the method further comprises:
obtaining ticket information of a viewing ticket purchased by the user; and
the obtaining feature information corresponding to a promotion object specifically comprises:
obtaining feature information related to a viewed object corresponding to the ticket information.

11. The method according to claim 10, wherein the viewing ticket comprises at least one of a ticket of a sport competition event, a theater ticket, a movie ticket, a concert ticket, a tourist attraction ticket, and an amusement park ticket.

12. The method according to claim 10, wherein if the viewing ticket is a ticket of a sport competition event, the method further comprises:
determining, based on a ticket of a sport competition event purchased by the user, a competition game corresponding to the ticket of the sport competition event; and
the obtaining feature information corresponding to a promotion object specifically comprises:
obtaining feature information corresponding to the competition game.

13. An artistic code image generation apparatus, comprising:
a request obtaining module, configured to obtain a code image generation request generated based on a trigger operation of a user;
a code data generating module, configured to generate initial two-dimensional code image data based on the code image generation request;
a feature obtaining module, configured to obtain feature information corresponding to a promotion object; and
an image processing module, configured to use a generative artificial intelligence algorithm to process the initial two-dimensional code image data based on the feature information, to obtain an artistic code image.

14. An artistic code image generation device, comprising:
at least one processor; and
a memory communicatively connected to the at least one processor, wherein
the memory stores instructions executable by the at least one processor, and the instructions are executed by the at least one processor, to cause the at least one processor to:
obtain a code image generation request generated based on a trigger operation of a user;
generate initial two-dimensional code image data based on the code image generation request;
obtain feature information corresponding to a promotion object; and
use a generative artificial intelligence algorithm to process the initial two-dimensional code image data based on the feature information, to obtain an artistic code image.

15. A computer-readable medium, having computer-readable instructions stored thereon, wherein the computer-readable instructions are executable by a processor to implement the artistic code image generation method according to any one of claims 1 to 12.
